# EUROPEAN PATENT APPLICATION

(11) **EP 4 618 429 A1**
(43) Date of publication of application: **17.09.2025**
(21) Application number: 25163746.8
(22) Date of filing: 14.03.2025
(51) Int. Cl.: H04B 1/525, H04B 1/10

(54) **APPARATUS AND METHODS FOR SELF-JAMMING CANCELLATION IN FULL DUPLEX RADIOS**

(30) Priority: 15.03.2024 US 202463565784 P; 13.03.2025 US 202519078621
(71) Applicant: Analog Devices International Unlimited Company, Limerick (IE)
(72) Inventor: BALAJ, Ovidiu, Co. Limerick (IE); GERSTBERGER, Armin, Wilmington, 01887 (US)
(74) Representative: Yang, Shu

(57) **Abstract**

Apparatus and methods for self-jamming cancellation in full duplex radios are disclosed herein. In certain embodiments, an RF front-end system includes a main power amplifier that amplifies an RF transmit signal from a main transmitter of a transceiver and a canceller power amplifier that amplifies an RF cancellation signal from a canceller transmitter of the transceiver. The RF front-end system operates to split the amplified RF cancellation signal into two or more cancellation signals including a first cancellation signal that is combined with an RF receive signal and a second cancellation signal that is combined with a sensed transmit signal from an output of the main power amplifier. The RF receive signal and the first cancellation signal are combined and provided to a main receiver of the transceiver, while the sensed transmit signal and the second cancellation signal are combined and provided to a canceller receiver of the transceiver.

## Description

### Field of the Disclosure

The disclosed technology relates generally to electronics, and more particularly to radio frequency communication systems. This application claims priority to US provisional Application No. 63/565,784, filed on Mar. 15, 2024 and to US non-provisional Application No. 19/078,621, filed on Mar. 13, 2025.

### BACKGROUND

Radio frequency (RF) communication systems are used to transmit and receive RF signals. Example applications for RF communication systems include, but are not limited to, cellular, radar, instrumentation, industrial electronics, military electronics, medical devices, and/or consumer electronics.

A classic radio system using frequency division duplexing (FDD) allocates a specific carrier frequency for transmit (Tx) and a different carrier frequency for receive (Rx). Using two different frequencies or channels, the radio system is capable of continuously transmitting and receiving to thereby enable full data throughput capabilities.

Full duplex radio technology allows for an RF communication system to use the same frequency for continuously transmitting and receiving. Although full duplex radio technology theoretically doubles spectral efficiency versus FDD, without applying specific technologies of self-jamming cancellation (SJC) the full duplex communication system will score diminished data throughput as a result of the system's own transmission interfering with its own reception.

### SUMMARY OF THE DISCLOSURE

In one aspect, a radio frequency (RF) communication system includes a transceiver including a main receiver, a canceller receiver, a main transmitter configured to generate an RF transmit signal, and a canceller transmitter configured to generate an RF cancellation signal. The RF communication system further includes an RF front-end system that is coupled to the transceiver. The RF front-end system including a main power amplifier configured to amplify the RF transmit signal to generate an amplified RF transmit signal and a canceller power amplifier configured to amplify the RF cancellation signal to generate an amplified RF cancellation signal, wherein the RF front-end system is configured to sense the amplified RF transmit signal to generate a sensed RF transmit signal, and to split the amplified RF cancellation signal into two or more cancellation signals including a first cancellation signal that is combined with an RF receive signal to generate a first combined signal and a second cancellation signal that is combined with the sensed RF transmit signal to generate a second combined signal. The main receiver is configured to receive the first combined signal, and the canceller receiver is configured to receive the second combined signal.

In another aspect, a method of self-interference cancellation in a radio frequency (RF) communication system. The method includes generating an RF transmit signal using a main transmitter, and generating an RF cancellation signal using a canceller transmitter. The method further includes amplifying the RF transmit signal to generate an amplified RF transmit signal using a main power amplifier, and amplifying the RF cancellation signal to generate an amplified RF cancellation signal using a canceller power amplifier. The method further includes sensing the amplified RF transmit signal to generate a sensed RF transmit signal, and splitting the amplified RF cancellation signal into two or more cancellation signals including a first cancellation signal that is combined with an RF receive signal to generate a first combined signal and a second cancellation signal that is combined with the sensed RF transmit signal to generate a second combined signal. The method further includes receiving the first combined signal as an input to a main receiver, and receiving the second combined signal as an input to a canceller receiver.

### BRIEF DESCRIPTION OF THE DRAWINGS

Figure 1A is a schematic diagram of one example of a radio frequency (RF) communication system with self-interference cancellation.
Figure 1B is a plot of signal versus noise characteristics for the RF communication system of Figure 1A.
Figure 2 is a schematic diagram of one embodiment of an RF communication system with self-interference cancellation.
Figure 3 is a schematic diagram of another embodiment of an RF communication system with self-interference cancellation.
Figure 4A is one example of plots of receiver noise floor and receiver output without cancellation.
Figure 4B is one example of plots of receiver noise floor and receiver output with active signal cancellation.
Figure 4C is one example of plots of single receiver noise floor, combined receiver noise floor, and receiver output with active signal and noise cancellation.

### DETAILED DESCRIPTION

The following detailed description of embodiments presents various descriptions of specific embodiments of the invention. However, the invention can be embodied in a multitude of different ways. In this description, reference is made to the drawings where like reference numerals may indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

A full duplex RF communication system transmits and receives using the same frequency. Although full duplex communication provides high spectral efficiency (double spectral efficiency relative to FDD), significant self-interference arises in such systems resulting in diminished data throughput of the system.

For example, a full duplex RF communication system can include a circulator through which a transmitter and a receiver access a common antenna. Additionally, a finite isolation of the circulator leads to a portion of the transmit signal received at a transmit port of the circulator leaking onto a receive port of the circulator and thereafter reaching an input of the receiver. Since transmit and receive occur at the same frequency, the transmit leakage is in-band with the intended receive signal.

Accordingly, to achieve full duplex, a full duplex RF communication system should fully cancel the significant self-interference to the received signal resulting from the system's own transmission. When self-interference is not completely canceled, any residual self-interference acts as noise to the received signal, thereby reducing signal-to-noise ratio (SNR) and the communication channel throughput.

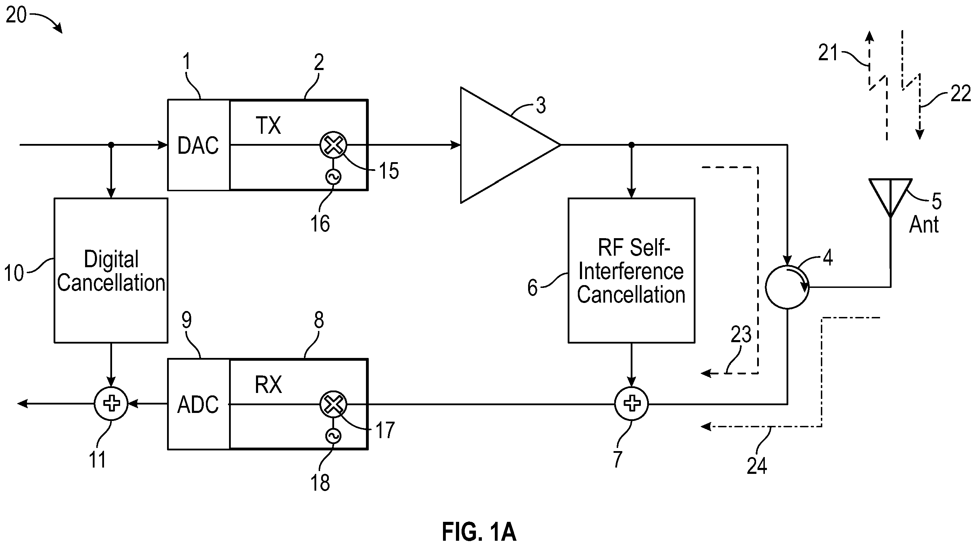

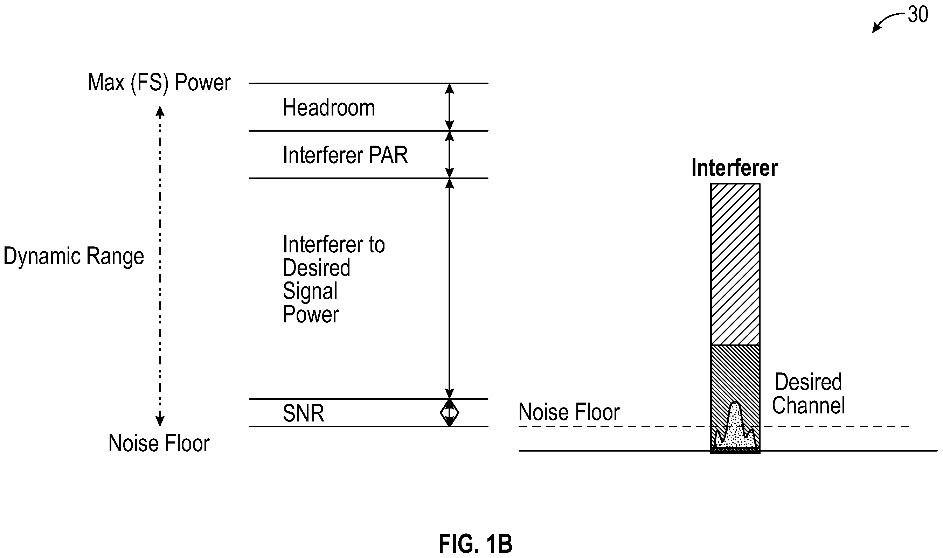

Figure 1A is a schematic diagram of one example of an RF communication system 20 with self-interference cancellation. Figure 1B is a plot of signal versus noise characteristics for the RF communication system 20 of Figure 1A.

With reference to Figures 1A and 1B, the RF communication system 20 includes a transmit digital-to-analog converter (DAC) 1, a transmitter (TX) 2, a power amplifier 3, a circulator 4, an antenna 5, an RF self-interference cancellation circuit 6, an RF adder 7, a receiver (RX) 8, a receive analog-to-digital converter (ADC) 9, a digital cancellation circuit 10, and a digital adder 11. The transmitter 2 includes a transmit-path mixer 15 and a transmit-path local oscillator (LO) 16, in this example. Additionally, the receiver 8 includes a receive-path mixer 17 and a receive-path LO 18, in this example.

In the depicted example, the RF communication system 20 is transmitting an RF transmit signal 21 and receiving an RF receive signal 22 on the same frequency. For example, the RF communication system 20 can operate using full duplex technology in which the same carrier frequency is used at the same time for the RF transmit signal 21 and the RF receive signal 22 as part of a continuous transmit and receive mode.

To generate the RF transmit signal 21, the transmitter 2 drives the power amplifier 3 in a forward path into the antenna 5 through the circulator 4. However, a portion of the transmitter and power amplifier (TX+PA) leakage 23 couples from the transmit port of the circulator 4 to the receive port of the circulator 4. The TX+PA leakage 23 combines with the intended receive signal 24.

For example, as shown in Figure 1B, the receive signal in the desired channel is co-located in frequency with the interferer.

Absent cancellation, the TX+PA leakage 23 adds to the intended receive signal 24 thereby interfering with and totally jamming the reception of the RF receive signal 22 by the receiver 8. Thus, it is desirable for the RF communication system 20 to completely cancel the self-interference arising from the TX+PA leakage 23.

The RF communication system 20 includes the RF self-interference cancellation circuit 6, which senses the output of the power amplifier 3 to generate an RF cancellation signal that is intended to cancel the TX+PA leakage 23. For example, RF self-interference cancellation circuit 6 can provide gain and phase shifting to generate the RF cancellation signal with about equal amplitude but opposite phase as the TX+PA leakage 23. Such self-cancellation in the RF domain should be combined with the cancellation in the digital domain by way of the digital cancellation circuit 10 and the digital adder 11.

Although providing self-interference cancellation in this manner can reduce self-jamming and improve the ability of the receiver 8 to receive the RF receive signal 22, a residual amount of self-interference nevertheless remains. The residual self-interference can desensitize the receiver 8 and/or degrade SNR.

Apparatus and methods for self-jamming cancellation in full duplex radios are disclosed herein. In certain embodiments, an RF communication system includes a transceiver and an RF front-end system that is coupled to the transceiver. The RF front-end system includes a main power amplifier that amplifies an RF transmit signal from a main transmitter of the transceiver and a canceller power amplifier that amplifies an RF cancellation signal from a canceller transmitter of the transceiver. The RF front-end system operates to split the amplified RF cancellation signal into two or more cancellation signals including a first cancellation signal that is combined with an RF receive signal and a second cancellation signal that is combined with a sensed transmit signal from an output of the main power amplifier. The RF receive signal and the first cancellation signal are combined and provided to a main receiver of the transceiver, while the sensed transmit signal and the second cancellation signal are combined and provided to a canceller receiver of the transceiver.

Implementing the RF communication system in this manner while presenting the same signal to the main transmitter and the canceller transmitter (with phase relation between the signals of the two transmitters in opposition (180°) and with same amplitudes), the effect of initial transmit signal cancellation will take place at the input of the main receiver and canceller receiver. This initial transmit signal cancellation mechanism prevents the main receiver and the canceller receiver from saturating thereby allowing the receivers to operate over a full dynamic range. Furthermore, the main receiver and the canceller receiver detect the residual noise that remains after the initial transmit signal cancellation. Accordingly, the output of the canceller receiver can be subtracted from the output of the main receiver in the digital domain to achieve self-jamming cancellation in which both signal and noise are cancelled.

Thus, the RF communication system can cancel not only transmit signal leakage, but also residual noise leakage of the main power amplifier and the canceller power amplifier.

The RF communication system can also be implemented with two or more main transmitters and two or more main receivers for processing RF signals associated with multiple channels. For example, a phased array can include multiple transmitters and receivers for beamforming. In multiple channel systems, the RF communication system can be implemented to share the canceller transmitter of the transceiver, thereby providing reductions in component counts and overall system efficiency.

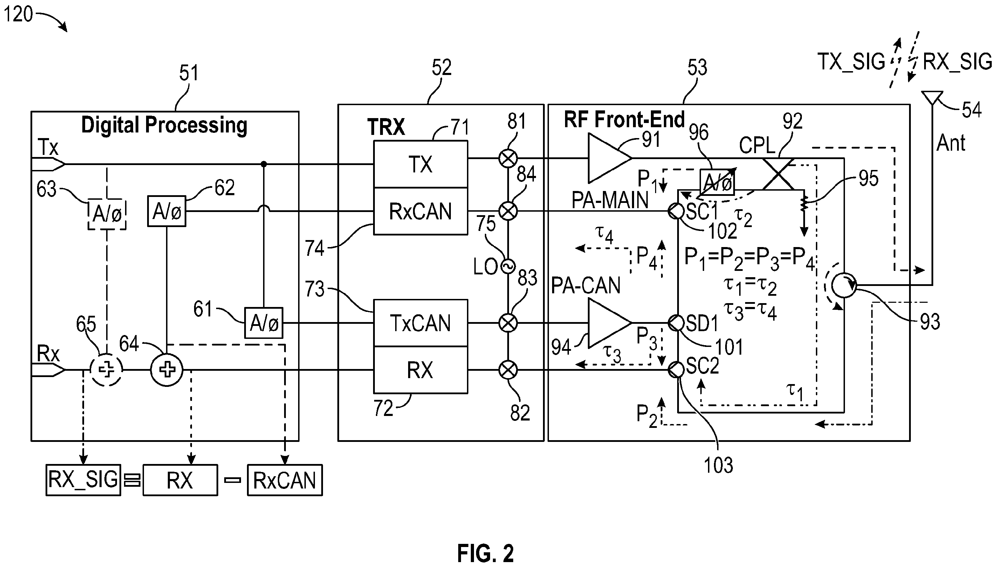

Figure 2 is a schematic diagram of one embodiment of an RF communication system 120 with self-interference cancellation. The RF communication system 120 includes a digital processing circuit 51, a transceiver (TRX) 52, an RF front-end system 53, and an antenna (Ant) 54.

The RF communication system 120 operates to transmit an RF transmit signal TX_SIG on the antenna 54 and to receive an RF receive signal RX_SIG on the antenna 54. The RF transmit signal TX_SIG and the RF receive signal RX_SIG can be at least partially overlapping in frequency. For example, the RF communication system 120 can be a full duplex communication system in which the RF transmit signal TX_SIG and the RF receive signal RX_SIG are simultaneously communicated over the same carrier frequency, for instance, as part of a continuous transmit and receive mode.

In the illustrated embodiment, the digital processing circuit 51 includes a transmit canceller gain and/or phase (gain/phase) adjustment circuit 61, a receive canceller gain/phase adjustment circuit 62, a transmit-to-receive gain/phase adjustment circuit 63, a first receive-path digital adder 64, and a second receive-path digital adder 65 (also referred to herein as digital post canceller 65). Although one example of a digital processing circuit is shown, a digital processing circuit can be implemented in other ways. For example, the digital processing circuit can perform gain and/or phase adjustment in other ways or include different implementations of adders and/or other digital circuity for processing the depicted signals.

With continuing reference to Figure 2, the transceiver 52 includes a main transmitter (TX) 71, a main receiver (RX) 72, a canceller transmitter (TxCAN) 73, a canceller receiver (RxCAN) 74, a local oscillator (LO) 75, a transmit-path mixer 81, a receive-path mixer 82, a transmit cancellation path-mixer 83, and a receive cancellation path-mixer 84. Although one example of a transceiver is shown, a transceiver can be implemented in other ways. For example, rather than using a mixer and LO for upconversion and downconversion of signals, direct conversion of RF signals (for instance, using RF DACs and RF ADCs) can be performed. Furthermore, the transceiver 52 can include multiple instantiations of the depicted components for handling signals associated with multiple transmit and receive signal channels and/or additional components such as filters for providing additional desired functionality. Thus, although one example of a transceiver is shown, the transceiver 52 can be implemented in a wide variety of ways. Although shown as including a single path for the mixers, the teachings are applicable to a wide range of signaling configurations, including implementations using in-phase (I) and quadrature-phase (Q) signal paths.

In the illustrated embodiment, the RF front-end system 53 includes a main power amplifier (PA-MAIN) 91, a coupler (CPL) 92, a circulator 93, a canceller power amplifier (PA-CAN) 94, a coupler termination impedance 95, a coupler gain/phase adjustment circuit 96, a signal splitter or divider (SD1) 101, a sensing-path signal combiner (SC1) 102, and a receive-path signal combiner (SC2) 103. Although one example of an RF-front-end system is shown, an RF-front-end system can be implemented in other ways. For example, the RF front-end system can sense an output of the main power amplifier 91 in a wide variety of ways. Furthermore, signal splitting and combining can be implemented in other ways. Moreover, the RF front-end system can include various other components, such as attenuators, amplifiers, filters, switches, diplexing structures, and/or other components for achieving a wide variety of functions. Thus, although one example of an RF front-end system is shown, the RF front-end system 53 can be implemented in a wide variety of ways.

Although Figure 2 depicts the digital processing circuit 51, the transceiver 52, and the RF front-end system 53 as separate boxes, the depicted components need not be implemented separately (for instance, on separate semiconductor chips or dies). Thus, the depicted components can be physically implemented on one or more chips and/or modules as desired for a particular application.

With continuing reference to Figure 2, the digital processing circuit 51 serves to synthesize and send a digital waveform of the transmit signal to the main transmitter 71. Additionally, the main transmitter 71 converts the digital waveform of the transmit signal into an analog transmit signal, which is upconverted by the LO 75 and the transmit-path mixer 81 to generate an RF transmit signal at the desired communication carrier frequency.

As shown in Figure 2, the main power amplifier 91 amplifies the RF transmit signal to generate an amplified RF transmit signal that is provided to the antenna 54 by way of the coupler 92 and the circulator 93. The main power amplifier 91 amplifies the RF transmit signal to achieve a desired output power for transmitting the RF transmit signal TX_SIG. Additionally, the coupler 92 senses or samples the output of the main power amplifier 91. After any desired amplitude and/or phase adjustment by the coupler gain/phase adjustment circuit 96, the sensed power amplifier output is provided to the canceller receiver 74 by way of the sensing-path combiner 102.

With continuing reference to Figure 2, the RF receive signal RX_SIG is received at the receive-path signal combiner 103 by way of the circulator 93. The circulator 93 allows the amplified RF transmit signal from the main power amplifier 91 to be provided to the antenna 54 while isolating the main receiver 72 (which is using the same LO 75 and the main transmitter 71, in this example). The isolation factor of the circulator 93 determines the amount of signal leakage from the circulator's transmit port to the circulator's receive port and thereafter into the main receiver 72. Such leakage is also referred to herein as a self-jamming interferer (SJI). Absent self-interference cancellation, SJI can saturate the main receiver 72 and cause jamming.

In the illustrated embodiment, the coupling factor of the coupler 92 and the coupler gain/phase adjustment circuit 96 are selected such that a signal power P1 of the sensed transmit signal is equal to a signal power P2 at the receive-path signal combiner 103.

With continuing reference to Figure 2, the canceller transmitter 73 can be implemented to be identical to the main transmitter 71. In this example, the canceller transmitter 73 and the main transmitter 71 share the same LO 75. The canceller transmitter 73 can generate an RF cancellation signal that is a copy or replica of the RF transmit signal generated from the main transmitter 71 but of opposite phase (180 degrees out of phase) and equal amplitude. For example, the RF cancellation signal from the canceller transmitter 73 has a common waveform with a phase shift of 180 degrees provided by the transmit canceller gain/phase adjustment circuit 61. The RF cancellation signal from the canceller transmitter 73 serves to cancel the SJI signal at the input of the main receiver 72 and canceller receiver 74.

In the illustrated embodiment, the canceller power amplifier 94 amplifies the RF cancellation signal to equal the amplitude of the SJI at the input to the receive-path signal combiner 103. Furthermore, by using the signal divider 101, the amplified RF cancellation signal is divided into multiple cancellation signals including a first cancellation signal provided to the receive-path signal combiner 103 and a second cancellation signal provided to the sensing-path signal combiner 102. Thus, the same cancellation used for cancelling the SJI is also used to cancel the signal coming from the coupler 92 and going into the canceller receiver 74 through the sensing-path signal combiner 102. The first cancellation signal has a signal power P3 while the second cancellation signal has a signal power P4.

As shown in Figure 2, the RF communication system 120 uses gain control to implement a power alignment P1=P2=P3=P4.

With continuing reference to Figure 2, in the digital domain, the digital processing circuit 51 subtracts the digital output of the canceller receiver 74 from the digital output of the main receiver 72 resulting in a digital representation of the desired receive signal RX_SIG.

By implementing the RF communication system 120 in this manner, cancellation of the transmit signals associated with the main path and the canceller path is achieved. However, both the main path and the canceller path have different noises, for instance, each with a distinct noise signature. Absent cancellation, the noise floor of the main receiver 72 and the canceller receiver 74 will be limited by the combined noise of the PA-MAIN 91 and the PA-CAN 94.

In the illustrated embodiment, the delay τ1 and τ2 are constrained to be equal, while the delay τ3 and τ4 are also constrained to be equal. In this example, τ1 corresponds to a delay from the coupler 92 to the receive-path signal combiner 103, τ2 corresponds to a delay from the coupler 92 to the sensing-path signal combiner 102, τ3 corresponds to a delay from the signal divider 101 through the receive-path signal combiner 103, and τ4 corresponds to a delay from the signal divider 101 through the sensing-path signal combiner 102. Such delay matching can be achieved by design and/or using any desired time/phase alignment circuitry. In certain implementations, the delay matching is controllable and/or calibrated.

By imposing time or delay constraints of the main loop (τ1=τ2 and τ3=τ4) and the power constraint (P1=P2=P3=P4) the signal and noises associated with the transmit amplification paths will also cancel at the output of the digital combiner 64 of the digital processing circuit 51. As a result, the receiver sensitivity and dynamic range are limited by the receiver's own noise floor and resolution rather than by noise of the amplification paths.

In the illustrated embodiment, the RF communication system 120 also includes the second receive-path digital adder 65 for performing residual transmit signal cancellation in the digital domain.

Accordingly, full self-interference cancellation can be achieved. This allows the RF communication system 120 to use full duplex communications to achieve the same performance as frequency division duplexing (FDD) with the immediate benefit of doubling spectral efficiency of the radio communication.

Such performance benefits can be achieved at any desired carrier frequency. For example, the RF communication system 120 can operate at any desired frequency including not only lower RF signal frequencies between 100 MHz and 7 GHz, but also to higher frequencies, such as those in the X band (about 7 GHz to 12 GHz), the Kᵤ band (about 12 GHz to 18 GHz), the K band (about 18 GHz to 27 GHz), the Kₐ band (about 27 GHz to 40 GHz), the V band (about 40 GHz to 75 GHz), and/or the W band (about 75 GHz to 110 GHz). Accordingly, the teachings herein are applicable to a wide variety of RF communication systems, including microwave communication systems.

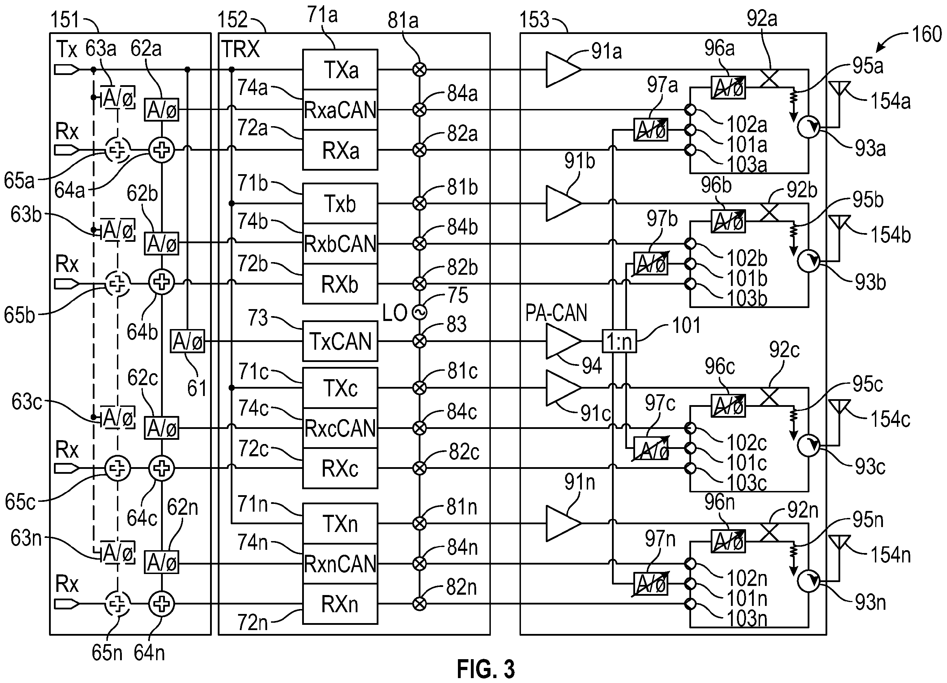

Figure 3 is a schematic diagram of another embodiment of an RF communication system 160 with self-interference cancellation. The RF communication system 160 includes a digital processing circuit 151, a transceiver 1 52, an RF front-end system 153, and antennas 154a, 154b, 154c, ... 154n.

The RF communication system 160 of Figure 3 is similar to the RF communication system 120 of Figure 2, except that the RF communication system 160 is implemented with n antennas, n transmit paths, n main receive paths, n canceller receive paths, and 1 canceller path, where n is an integer greater than or equal to 2. By sharing the canceller path across transmit and receive paths, the number of noise sources in the system is reduced to the minimum necessary.

In the illustrated embodiment, the digital processing circuit 151 includes a transmit canceller gain/phase adjustment circuit 61, receive canceller gain/phase adjustment circuits 62a, 62b, 62c, ... 62n, transmit-to-receive gain and phase adjustment circuits 63a, 63b, 63c, ... 63n, first receive-path digital adders 64a, 64b, 64c, ... 64n, and second receive-path digital adders 65a, 65b, 65c, ... 65n. Additionally, the transceiver 152 includes n main transmitters 71a, 71b, 71c, ... 71n, n main receivers 72a, 72b, 72c, ... 72n, one canceller transmitter 73, n canceller receivers 74a, 74b, 74c, ... 74n, LO 75, transmit-path mixers 81a, 81b, 81c, ... 81n, receive-path mixers 82a, 82b, 82c, ... 82n, a transmit cancellation path-mixer 83, and receive cancellation path-mixers 84a, 84b, 84c, ... 84n. Thus, all transmit and receive mixers are driven by the same LO 75, in this example.

With continuing reference to Figure 3, the RF front-end system 153 includes main power amplifiers 91a, 91b, 91c, ... 91n, couplers 92a, 92b, 92c, ... 92n, circulators 93a, 93b, 93c, ... 93n, one canceller power amplifier (PA-CAN) 94, coupler termination impedances 95a, 95b, 95c, ... 95n, coupler gain/phase adjustment circuits 96a, 96b, 96c, ... 96n, signal dividers 101a, 101b, 101c, ... 101n, sensing-path signal combiners 102a, 102b, 102c, ... 102n, receive-path signal combiner 103a, 103b, 103c, ... 103n, one canceller n:1 divider 101, and channel gain/phase adjustment circuits 97a, 97b, 97c, ... 97n.

Inclusion of the channel gain/phase adjustment circuits 97a, 97b, 97c, ... 97n provides additional flexibility in aligning the cancellation signal from the canceller power amplifier 94 with each of the transmit and receive channels. Furthermore, the channel gain/phase adjustment circuits 97a, 97b, 97c, ... 97n can provide gain and phase alignment to account for jamming arising from coupling between antennas.

Although an example is shown in which the canceller transmitter 73 is shared across all transmit and receive channels, the teachings herein are also applicable to configurations including more than one canceller transmitter.

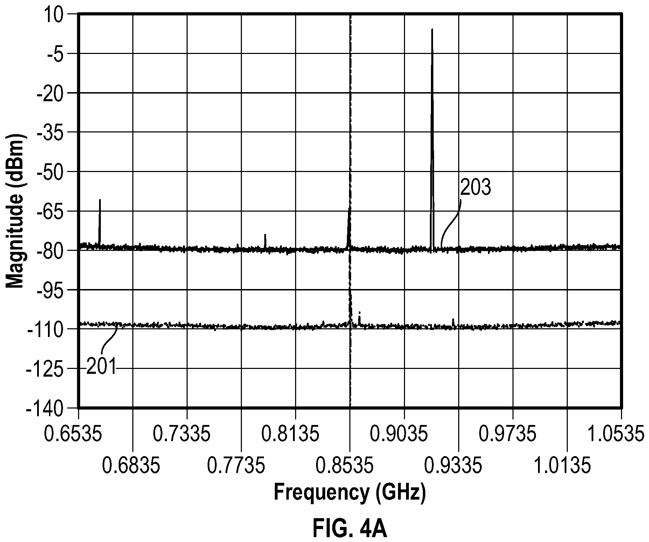

Figure 4A is one example of plots of receiver noise floor 201 (without RF signal at the input) and receiver output 203 (with RF transmit leakage signal at the input and without cancellation). The plot depicts a measurement of a full duplex RF communication system that does not cancel the self-interference arising from a 915MHz transmit signal. Thus, a continuous wave (CW) signal from the main transmitter / main power amplifier is received as a self-jammer at the receiver. To avoid receiver saturation, a 30dB attenuator is needed and hence the elevated noise floor versus receiver noise floor. The measurements are depicted using 15dB/division.

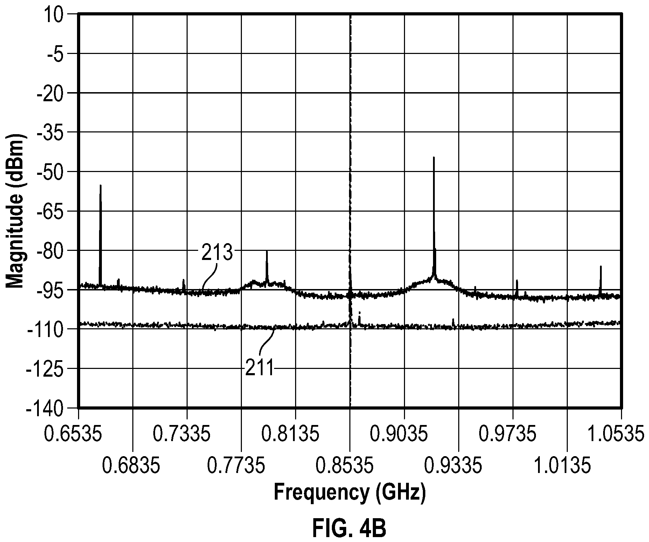

Figure 4B is one example of plots of receiver noise floor 211 (without RF signal at the input) and receiver output 213 (with RF transmit leakage signal at the input and with active signal cancellation). The plot depicts a measurement of a full duplex RF communication system in which transmit signal cancellation has been used to cancel self-interference arising from a 915MHz transmit signal. Although the transmit signal cancellation cancels the transmit signal and avoids a need for a 30dB attenuator, a residual noise remaining in the receiver output 213 is well above the receiver noise floor 211.

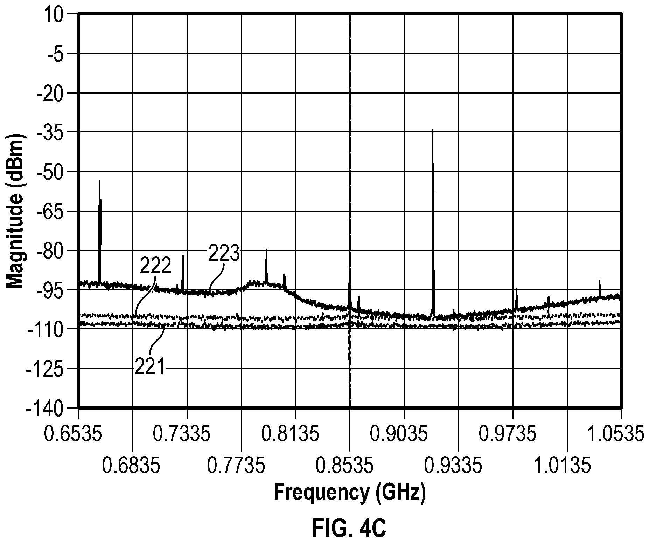

Figure 4C is one example of plots of single receiver noise floor 221 (without RF signal at the input), combined receivers (main and canceller) noise floor 222 (without RF signal at the input), and receiver output 223 (with RF transmit leakage signal at the input and with active signal and noise cancellation without digital post canceller 65). The plots are for a measurement of a full duplex RF communication system in which transmit signal and noise cancellation has been used to cancel self-interference arising from a 915MHz transmit signal. In this example, both a main receiver and a canceller receiver have been used, and thus the combined receiver noise floor 222 is greater than that of the single receiver noise floor 221. However, by taking the difference between the output of the main receiver and the canceller receiver, both transmit signal and noise cancellation is achieved. Thus, sensitivity and dynamic range are limited by the combined receiver noise floor 222 rather than by noise of the transmit amplification paths. In Figure 4C, digital cancellation using the digital post canceller 65 has not been used. Activating the digital post canceller 65 provides further reduction of interference.

### Conclusion

Aspects of this disclosure can be implemented in various electronics. Examples of such electronics include, but are not limited to, RF communication systems, consumer electronic products, electronic test equipment, communication infrastructure, radar systems, base stations, mobile devices (for instance, smartphones or handsets), phased array antenna systems, RFIDs, medical devices, laptop computers, tablets, and/or wearable electronics.

The foregoing description may refer to elements or features as being "connected" or "coupled" together. As used herein, unless expressly stated otherwise, "connected" means that one element/feature is directly or indirectly connected to another element/feature, and not necessarily mechanically. Likewise, unless expressly stated otherwise, "coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected).

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

### Numbered aspects

By way of non-limiting example, some aspects of the disclosure are set out in the following numbered clauses.
Numbered Clause 1. A radio frequency (RF) communication system comprising:
   a transceiver including a main receiver, a canceller receiver, a main transmitter configured to generate an RF transmit signal, and a canceller transmitter configured to generate an RF cancellation signal; and
   an RF front-end system that is coupled to the transceiver, the RF front-end system comprising a main power amplifier configured to amplify the RF transmit signal to generate an amplified RF transmit signal and a canceller power amplifier configured to amplify the RF cancellation signal to generate an amplified RF cancellation signal, wherein the RF front-end system is configured to sense the amplified RF transmit signal to generate a sensed RF transmit signal, and to split the amplified RF cancellation signal into two or more cancellation signals including a first cancellation signal that is combined with an RF receive signal to generate a first combined signal and a second cancellation signal that is combined with the sensed RF transmit signal to generate a second combined signal,
   wherein the main receiver is configured to receive the first combined signal, and the canceller receiver is configured to receive the second combined signal.
Numbered Clause 2. The RF communication system of Numbered Clause 1, further comprising a digital processing circuit coupled to the transceiver, the digital processing circuit configured to subtract a digital output of the canceller receiver from a digital output of the main receiver to generate a digital representation of the RF receive signal.
Numbered Clause 3. The RF communication system of Numbered Clause 2, wherein the main transmitter is configured to receive a digital transmit signal from the digital processing circuit, the digital processing circuit further configured to subtract an amplitude and phase adjusted version of the digital transmit signal from the digital representation of the RF receive signal.
Numbered Clause 4. The RF communication system of any preceding Numbered Clause, wherein the transceiver further includes at least one additional main transmitter, at least one additional main receiver, and at least one additional canceller receiver, wherein the RF cancellation signal from the canceller transmitter is used for self-interference cancellation for the at least one additional main transmitter, the at least one additional main receiver, and the at least one additional canceller receiver.
Numbered Clause 5. The RF communication system of any preceding Numbered Clause, further comprising an antenna, wherein the RF front-end system includes a circulator having a transmit port configured to receive the amplified RF transmit signal from the main power amplifier, a receive port configured to output the RF receive signal, and an antenna port coupled to the antenna.
Numbered Clause 6. The RF communication system of any preceding Numbered Clause, wherein the RF front-end system further includes signal divider configured to divide the amplified RF cancellation signal into the first cancellation signal and the second cancellation signal, a first signal combiner configured to combine the first cancellation signal and the RF receive signal to generate the first combined signal for the main receiver, and a second signal combiner configured to combine the first cancellation signal and the sensed RF transmit signal to generate the second combined signal for the canceller receiver.
Numbered Clause 7. The RF communication system of any preceding Numbered Clause, wherein the RF front-end system includes a coupler electrically connected to an output of the main power amplifier, the coupler configured to generate the sensed RF transmit signal.
Numbered Clause 8. The RF communication system of Numbered Clause 7, further comprising a gain and/or phase adjustment circuit configured to adjust at least one of a gain or a phase of the sensed RF transmit signal.
Numbered Clause 9. The RF communication system of any preceding Numbered Clause, wherein the transceiver includes a local oscillator shared by the main transmitter, the main receiver, the canceller transmitter and the canceller receiver.
Numbered Clause 10. The RF communication system of any preceding Numbered Clause, wherein the RF transmit signal and the RF receive signal have a common carrier frequency, and the RF communication system is full duplex.
Numbered Clause 11. The RF communication system of any preceding Numbered Clause, wherein the canceller transmitter is configured to generate the RF cancellation signal with an equal amplitude but opposite phase as the RF transmit signal.
Numbered Clause 12. A method of self-interference cancellation in a radio frequency (RF) communication system, the method comprising:
   generating an RF transmit signal using a main transmitter, and generating an RF cancellation signal using a canceller transmitter;
   amplifying the RF transmit signal to generate an amplified RF transmit signal using a main power amplifier, and amplifying the RF cancellation signal to generate an amplified RF cancellation signal using a canceller power amplifier;
   sensing the amplified RF transmit signal to generate a sensed RF transmit signal;
   splitting the amplified RF cancellation signal into two or more cancellation signals including a first cancellation signal that is combined with an RF receive signal to generate a first combined signal and a second cancellation signal that is combined with the sensed RF transmit signal to generate a second combined signal; and
   receiving the first combined signal as an input to a main receiver, and receiving the second combined signal as an input to a canceller receiver.
Numbered Clause 13. The method of Numbered Clause 9, further comprising subtracting a digital output of the canceller receiver from a digital output of the main receiver to generate a digital representation of the RF receive signal.
Numbered Clause 14. The method of Numbered Clause 10, further comprising providing a digital transmit signal to the main transmitter, and subtracting an amplitude and phase adjusted version of the digital transmit signal from the digital representation of the RF receive signal. Numbered Clause 15. The method of any of Numbered Clauses 9 to 14, further comprising using the RF cancellation signal from the canceller transmitter for self-interference cancellation for at least one additional main transmitter, at least one additional main receiver, and at least one additional canceller receiver.
Numbered Clause 16. The method of any of Numbered Clauses 9 to 15, further comprising using a signal divider to divide the amplified RF cancellation signal into the first cancellation signal and the second cancellation signal, using a first signal combiner to combine the first cancellation signal and the RF receive signal to generate the first combined signal for the main receiver, and using a second signal combiner to combine the first cancellation signal and the sensed RF transmit signal to generate the second combined signal for the canceller receiver.
Numbered Clause 17. The method of any of Numbered Clauses 9 to 16, wherein sensing the amplified RF transmit signal to generate the sensed RF transmit signal includes coupling an output of the main power amplifier to generate the sensed RF transmit signal using a coupler.
Numbered Clause 18. The method of Numbered Clause 14, further comprising providing at least one of a gain adjustment or a phase adjustment to the sensed RF transmit signal.
Numbered Clause 19. The method of any of Numbered Clauses 9 to 18, wherein the RF transmit signal and the RF receive signal have a common carrier frequency.
Numbered Clause 20. The method of any of Numbered Clauses 9 to 19, wherein generating the RF cancellation signal comprises generating the RF cancellation signal with an equal amplitude but opposite phase as the RF transmit signal.

## Claims

1. A radio frequency (RF) communication system comprising:
a transceiver including a main receiver, a canceller receiver, a main transmitter configured to generate an RF transmit signal, and a canceller transmitter configured to generate an RF cancellation signal; and
an RF front-end system that is coupled to the transceiver, the RF front-end system comprising a main power amplifier configured to amplify the RF transmit signal to generate an amplified RF transmit signal and a canceller power amplifier configured to amplify the RF cancellation signal to generate an amplified RF cancellation signal, wherein the RF front-end system is configured to sense the amplified RF transmit signal to generate a sensed RF transmit signal, and to split the amplified RF cancellation signal into two or more cancellation signals including a first cancellation signal that is combined with an RF receive signal to generate a first combined signal and a second cancellation signal that is combined with the sensed RF transmit signal to generate a second combined signal,
wherein the main receiver is configured to receive the first combined signal, and the canceller receiver is configured to receive the second combined signal.

2. The RF communication system of Claim 1, further comprising a digital processing circuit coupled to the transceiver, the digital processing circuit configured to subtract a digital output of the canceller receiver from a digital output of the main receiver to generate a digital representation of the RF receive signal.

3. The RF communication system of Claim 2, wherein the main transmitter is configured to receive a digital transmit signal from the digital processing circuit, the digital processing circuit further configured to subtract an amplitude and phase adjusted version of the digital transmit signal from the digital representation of the RF receive signal.

4. The RF communication system of any preceding Claim, wherein the transceiver further includes at least one additional main transmitter, at least one additional main receiver, and at least one additional canceller receiver, wherein the RF cancellation signal from the canceller transmitter is used for self-interference cancellation for the at least one additional main transmitter, the at least one additional main receiver, and the at least one additional canceller receiver.

5. The RF communication system of any preceding Claim, further comprising an antenna, wherein the RF front-end system includes a circulator having a transmit port configured to receive the amplified RF transmit signal from the main power amplifier, a receive port configured to output the RF receive signal, and an antenna port coupled to the antenna.

6. The RF communication system of any preceding Claim, wherein the RF front-end system further includes signal divider configured to divide the amplified RF cancellation signal into the first cancellation signal and the second cancellation signal, a first signal combiner configured to combine the first cancellation signal and the RF receive signal to generate the first combined signal for the main receiver, and a second signal combiner configured to combine the first cancellation signal and the sensed RF transmit signal to generate the second combined signal for the canceller receiver.

7. The RF communication system of any preceding Claim, wherein the RF front-end system includes a coupler electrically connected to an output of the main power amplifier, the coupler configured to generate the sensed RF transmit signal, preferably further comprising a gain and/or phase adjustment circuit configured to adjust at least one of a gain or a phase of the sensed RF transmit signal.

8. The RF communication system of any preceding Claim, wherein the transceiver includes a local oscillator shared by the main transmitter, the main receiver, the canceller transmitter and the canceller receiver and/or wherein the RF transmit signal and the RF receive signal have a common carrier frequency, and the RF communication system is full duplex and/or wherein the canceller transmitter is configured to generate the RF cancellation signal with an equal amplitude but opposite phase as the RF transmit signal.

9. A method of self-interference cancellation in a radio frequency (RF) communication system, the method comprising:
generating an RF transmit signal using a main transmitter, and generating an RF cancellation signal using a canceller transmitter;
amplifying the RF transmit signal to generate an amplified RF transmit signal using a main power amplifier, and amplifying the RF cancellation signal to generate an amplified RF cancellation signal using a canceller power amplifier;
sensing the amplified RF transmit signal to generate a sensed RF transmit signal;
splitting the amplified RF cancellation signal into two or more cancellation signals including a first cancellation signal that is combined with an RF receive signal to generate a first combined signal and a second cancellation signal that is combined with the sensed RF transmit signal to generate a second combined signal; and
receiving the first combined signal as an input to a main receiver, and receiving the second combined signal as an input to a canceller receiver.

10. The method of Claim 9, further comprising subtracting a digital output of the canceller receiver from a digital output of the main receiver to generate a digital representation of the RF receive signal.

11. The method of Claim 10, further comprising providing a digital transmit signal to the main transmitter, and subtracting an amplitude and phase adjusted version of the digital transmit signal from the digital representation of the RF receive signal.

12. The method of any of Claims 9 to 11, further comprising using the RF cancellation signal from the canceller transmitter for self-interference cancellation for at least one additional main transmitter, at least one additional main receiver, and at least one additional canceller receiver.

13. The method of any of Claims 9 to 12, further comprising using a signal divider to divide the amplified RF cancellation signal into the first cancellation signal and the second cancellation signal, using a first signal combiner to combine the first cancellation signal and the RF receive signal to generate the first combined signal for the main receiver, and using a second signal combiner to combine the first cancellation signal and the sensed RF transmit signal to generate the second combined signal for the canceller receiver.

14. The method of any of Claims 9 to 13, wherein sensing the amplified RF transmit signal to generate the sensed RF transmit signal includes coupling an output of the main power amplifier to generate the sensed RF transmit signal using a coupler, preferably further comprising providing at least one of a gain adjustment or a phase adjustment to the sensed RF transmit signal.

15. The method of any of Claims 9 to 14, wherein the RF transmit signal and the RF receive signal have a common carrier frequency and/or wherein generating the RF cancellation signal comprises generating the RF cancellation signal with an equal amplitude but opposite phase as the RF transmit signal.
